# EUROPEAN PATENT APPLICATION

(11) **EP 3 089 428 A1**
(43) Date of publication of application: **02.11.2016**
(21) Application number: 15165510.7
(22) Date of filing: 28.04.2015
(51) Int. Cl.: H04L 29/08, G06F 9/455

(54) **METHOD AND APPARATUS FOR DEPLOYING APPLICATIONS**

(71) Applicant: ALCATEL LUCENT, 92100 Boulogne-Billancourt (FR)
(72) Inventor: Heralla, Islam, 44000 Kfar Saba (IL)
(74) Representative: Cabinet Camus Lebkiri

(57) **Abstract**

The present invention relates to a method and apparatus for deploying a first and a second application (APP-A, APP-B), the method comprising:
- Receiving a first request for deploying a first application;
- Creating a main virtual machine (M-VM) comprising an operating system (OS) and a container execution engine (CE-ENGINE);
- Creating a first container (CONT-A) on the main virtual machine (M-VM) by using the container execution engine (CE-ENGINE), the first container (CONT-A) being configured to connect the cloud management system (CMS) to a first application network (NET-A) enabling the first application (APP-A);
- Receiving a second request for deploying a second application;
- Creating a second container (CONT-B) on the main virtual machine (M-VM) by using the container execution engine (CE-ENGINE), the second container (CONT-B) being configured to connect the cloud management system (CMS) to a second application network (NET-B) enabling the second application (APP-B).

## Description

### FIELD OF THE INVENTION

The invention relates generally to methods and apparatus for deploying applications.

### BACKGROUND

In the prior art, a cloud based architecture enabling users to perform intended tasks or applications deployed a set of hosted resources such as processors, operating systems, software and other components that may combined to form virtual machines (VM). Such a cloud may also be known as laas (Infrastructure as a Service) or PaaS (Platform as a Service).

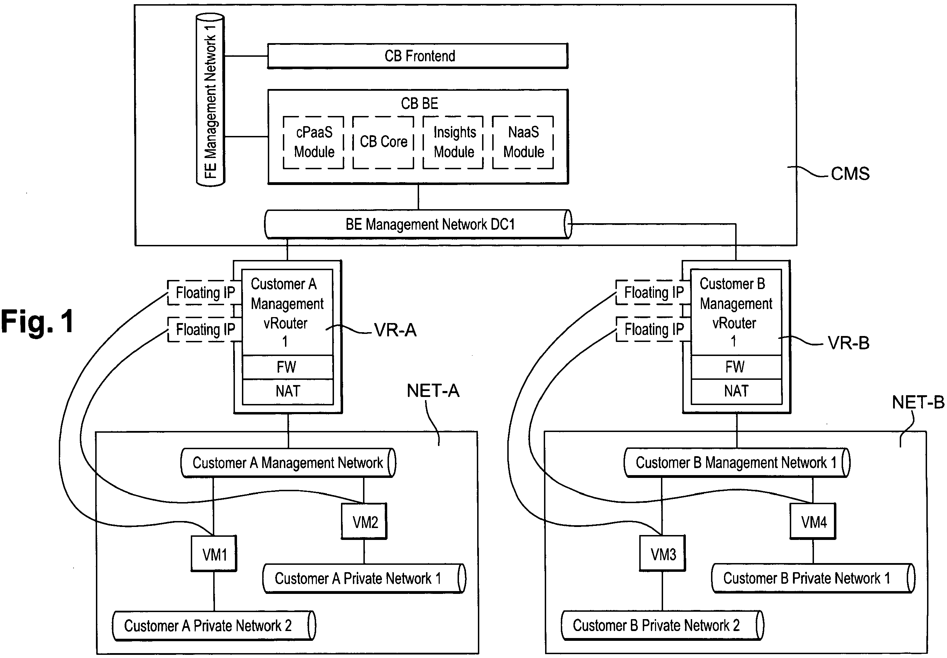

Figure 1 represents a cloud based architecture of the prior art. This cloud based architecture comprises a cloud management system CMS and a plurality of virtual machines VM1, VM2, VM3, VM4. In this example, the virtual machines VM1 and VM2 form a first network NET-A enabling a first application APP-A, while the virtual machines VM3 and VM4 form a second network NET-B enabling a second application APP-B. In some known systems, to securely connect the cloud management system CMS to the network NET-A and NET-B, a first and a second virtual router VR-A, VB-B are created. Each virtual router VR-A, VR-B comprises its own operating system.

### SUMMARY

The invention aims at providing a method for deploying applications providing comparable security as the methods of the prior art while decreasing the computing resources consumption.

In a first embodiment, a method for deploying a first and a second application is provided. The method comprises:
- Receiving a first request for deploying a first application;
- Creating a main virtual machine comprising an operating system and a container execution engine;
- Creating a first container on the main virtual machine by using the container execution engine, the first container being configured to connect the cloud management system to a first application network enabling the first application;
- Receiving a second request for deploying a second application;
- Creating a second container on the main virtual machine by using the container execution engine, the second container being configured to connect the cloud management system to a second application network enabling the second application.

In a second embodiment, a cloud management system is provided. The cloud management system comprises:
- a data storage system;
- a processor in communication with the data storage system, the processor being configured to:
   o Receive a first request for deploying a first application;
   o Create a main virtual machine comprising an operating system and a container execution engine;
   o Create a first container on the main virtual machine by using the container execution engine, the first container being configured to connect the cloud management system to a first application network enabling the first application;
   o Receive a second request for deploying a second application;
   o Create a second container on the main virtual machine by using the container execution engine, the second container being configured to connect the cloud management system to a second application network enabling the second application.

In a third embodiment, a non-transitory computer-readable storage medium is provided. The non-transitory computer-readable storage medium stores instructions which, when executed by a computer, cause the computer to perform a method comprising:
- Receiving a first request for deploying a first application;
- Creating a main virtual machine comprising an operating system and a container execution engine;
- Creating a first container on the main virtual machine by using the container execution engine, the first container being configured to connect the cloud management system to a first application network enabling the first application;
- Receiving a second request for deploying a second application;
- Creating a second container on the main virtual machine by using the container execution engine, the second container being configured to connect the cloud management system to a second application network enabling the second application.

In some embodiments, the method may further comprise a step of configuring containers to authorize direct connection from the cloud management system to the corresponding application network but to block direct connection from said application network to the cloud management system.

In some embodiments, the method may further comprise a step of adding to containers:
A first virtual network interface enabling connection of the cloud management system to said container, and
A second virtual network interface enabling connection of said container to the corresponding application network.

In some embodiments, the method may further comprise a step of configuring a forwarding of port from a port of the second virtual network interface to the cloud management system through the first virtual network interface.

In some embodiments, the method may further comprise a step of adding a first namespace to the first container.

In some embodiments, the method may further comprise a step of adding a second namespace to the second container, the second namespace being isolated from the first namespace.

### BRIEF DESCRIPTION OF THE DRAWINGS

Some embodiments of methods in accordance with embodiments of the present invention are now described, by way of example only, and with reference to the accompanying drawings, in which:
- figure 1 schematically illustrates a cloud management system of the prior art;
- figure 2 schematically illustrates a cloud management system according to one embodiment;
- figure 3 schematically illustrates the steps of a method according to one embodiment;
- figure 4 schematically illustrates an apparatus according to one embodiment.

### DESCRIPTION OF EMBODIMENTS

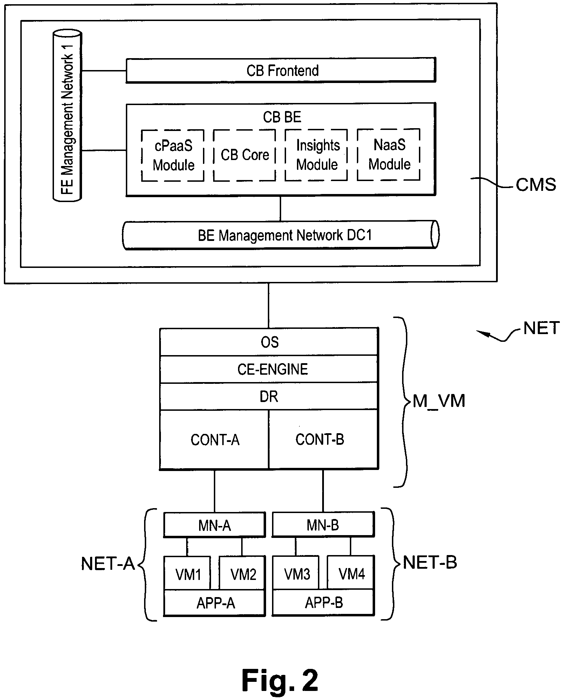

Figure 2 illustrates a network NET for providing cloud-based applications. The network NET may include a public network for facilitating communications between various components of the network. In some embodiments, the public network may include the Internet.

The network NET may include a cloud management system CMS and a first and a second application networks NET-A, NET-B.

In one embodiment, the cloud management system CMS may be a device configured to manage the various hardware and software provisioned within a cloud system. The cloud management system may comprise a front end module CB Frontend configured to receive requests. The front end module may be accessed through a public network like the Internet. The cloud management system may also comprise a back end module CB BE. The back end module CB BE may be connected to the front end module through a private network. The back end module CB BE may comprise a carrier Plate-form as a service named "cPaaS Module", a cloud core named "CB Core", insights module and Naas module named "Naas Module".

In one embodiment, each application network NET-A, NET-B may be hosted in a data center. Each application network NET-A, NET-B may be in geographically separated sites that host hardware for supporting cloud-based systems. Application networks NET-A, NET-B may involve multiple blades, servers, or other computer systems for hosting VMs.

As shown, the network NET may host two applications: a first application APP-A and a second application APP-B. These applications may be owned or operated by the same customer or by different customers. The first application APP-A may use several virtual machines VM1, VM2 and an application manager MN-A hosted in the first application network NET-A. Likewise, the second application APP-B may use several virtual machines VM3, VM4 and one application manager MN-B hosted in the second application network NET-B.

Each application manager MN-A, MN-B may include virtual machines capable of managing an application deployed within the cloud. In various embodiments, the application managers MN-A, MN-B may form cPaaS managers (cPMs). The application managers MN-A, MN-B may perform various functions such as requesting infrastructure allocation or deallocation from the cloud management system CMS, loading virtual machines on the infrastructure, or monitoring application performance on the virtual machines. Application managers MN-A, MN-B may both deploy new applications and scale established applications within the cloud.

The virtual machines VM1 to VM4 may be virtual machines configured to provide one or more functions related to an application. These virtual machines VM1 to VM4 may be provided, selected, or otherwise specified by the customer for the purposes of providing the application and, as such, may vary from application to application. For example, if the first application APP-A is an e-commerce web-site, the virtual machine VM1 may provide a web-server front-end, while the virtual machine VM2 may provide a database backend. As another example, if the second application APP-B is a distributed computing application configured to divide and process a large data set, the virtual machines VM3 and VM4 may each provide processing of data chunks delivered from the data set.

It will be understood that, while exemplary network of figure 2 illustrates various virtual machines for providing two different applications, numerous additional applications may be supported. Each application network may support numerous additional application managers and application VMs associated with such other applications.

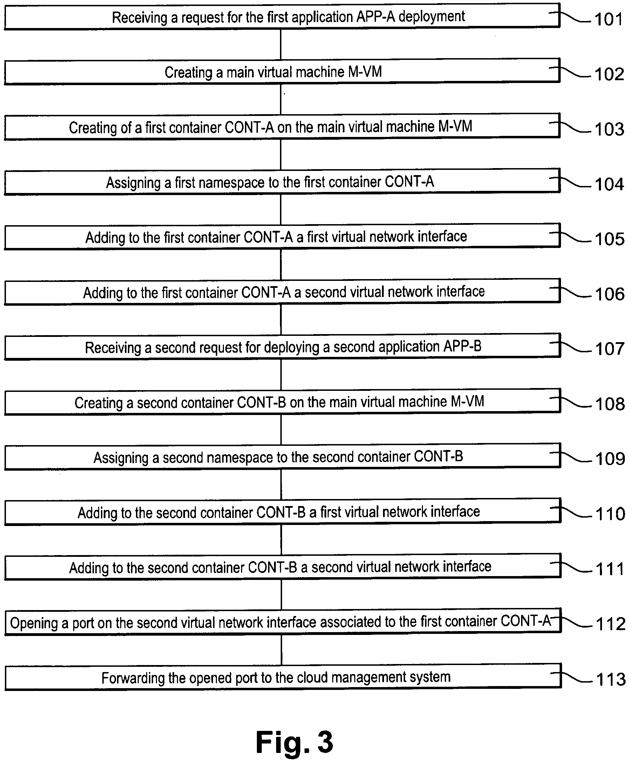

Figure 3 illustrates an exemplary method for deploying the applications APP-B and APP-B on the applications networks NET-A and NET-B. The method may be performed by the cloud management system CMS of figure 2.

The method may begin with a step 101 wherein the cloud management system CMS receives a request for the first application APP-A deployment from a customer. Such a request is, for example, received by the front end module of the cloud management system CMS.

The method may then comprise a step 102 of creation, by the cloud management system CMS, of a main virtual machine M-VM comprising an operating system OS and a container execution engine CE-ENGINE.

The method may then comprise a step 103 of creation, by container execution engine CE-ENGINE, of a first container CONT-A on the main virtual machine M-VM.

The method may then comprise a step 104 of assigning a first namespace to the first container CONT-A. The first container is further provided with mandatory access control stored in the first namespace. The first container uses the first namespace to isolate the first application's view of the cloud management system. A process that runs in the first namespace will only be visible by the container and the operating system OS running the container.

The method may then comprise a step 105 of adding to the first container CONT-A a first virtual network interface enabling connection of the cloud management system CMS to the first container CONT-A.

The method may then comprise a step 106 of adding to the first container CONT-A a second virtual network interface enabling connection of the first container CONT-A to the first application network NET-A. These first and the second virtual network interfaces are exclusively associated to the first container.

The first and the second virtual network interfaces enable connectivity between the cloud management system CMS and the first application network NET-A through the first container.

The fact that the first application network NET-A is not connected directly to the cloud management system CMS but through the first container CONT-A enables protection of the cloud management system from the first application network. The first container is then an isolation layer between the cloud management system CMS and the first application network NET-A.

The method may then comprise a step 107 of receiving a second request for deploying a second application APP-B.

In response, the method may comprise a step 108 of creating a second container CONT-B on the main virtual machine M-VM by using the container execution engine CE-ENGINE.

The method may then comprise a step 109 of assigning a second namespace to the second container CONT-B. The second container is also provided with mandatory access control. The second container uses the second namespace to isolate the second application's view of the cloud management system. A process that runs in the second namespace will only be visible by the container and the operating system OS running the container.

The second container CONT-B uses the same operating system OS as the first container CONT-A. The second container CONT-B uses a second namespace separated from the first namespace used by the first container. The first and the second container are then isolated.

The method may then comprise a step of connecting the cloud management system CMS to the second application network NET-B through the second container CONT-B.

The method may then comprise a step 110 of adding to the second container CONT-B a first virtual network interface enabling connection of the cloud management system CMS to the second container CONT-B.

The method may then comprise a step 111 of adding to the second container CONT-B a second virtual network interface enabling connection of the second container CONT-B to the second application network NET-B.

At the end of step 111, the cloud management system CMS can reach separately each of the application networks NET-A, NET-B through each of the containers CONT-A, CONT-B, but the application network NET-A, NET-B cannot reach the cloud management system CMS. It should be appreciated that the containers act as firewalls-routers.

If the first application APP-A needs to connect the cloud management system CMS, the method may comprise a step 112 opening a port on the second virtual network interface associated to the first container CONT-A.

The method may then comprise a step 113 of forwarding the opened port to the cloud management system.

This is handled with rules in the namespace of the stitch container. Incoming packets from the first application network NET-A are port forwarded inside the first container by using network address translation. The container execution engine applies its own network address translation rules. The container execution engine sends then the packets to the cloud management system.

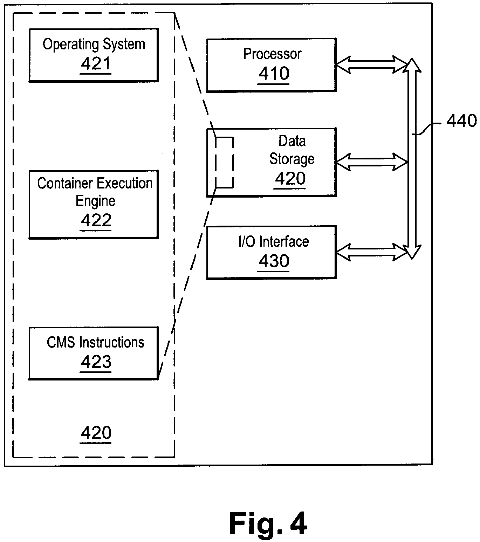

Figure 4 schematically illustrates an apparatus 400 underlying a cloud management system CMS as illustrated on figure 3.

The apparatus 400 includes at least a processor 410, a data storage system 420, and an input/output (I/O) interface 430. The processor 410 cooperates with the data storage system 420 and the I/O interface 430, via a system bus 440.The processor 410 controls the various operations of the cloud management system 400. When the apparatus acts, this is done by a processor of said apparatus driven by instruction codes stored in the data storage system of the apparatus. Usually instruction codes are loaded from the data storage system and correspond to an application. Consequently, an application can act too.

In some embodiments, the processor 410 may include resources such as processors/CPU cores, the I/O interface 430 may include any suitable network interfaces, and the data storage system 420 may include one or more storage devices such as magnetic storage, flash data storage, random access data storage, read only data storage, or any other suitable storage device. The data storage system may be local or distant.

In some embodiments, the apparatus 400 may be virtual machine. In some of these embodiments, the virtual machine may include components from different machines or be geographically dispersed. For example, the data storage system 420 and the processor 410 may be in two different physical machines.

The data storage system 420 may store the instruction codes implementing the functions described above. For example, the data storage system 420 may store an operating system 421 for managing the various hardware resources and providing common services to other instruction sets executed by the processor 410.

The data storage system 420 may store a container execution engine 422 for creation, management and execution of containers such as those described above.

In some embodiments, the data storage system 420 may also store cloud management system instructions 423 for implementing the functions of a cloud management system CMS as described above.

The I/O interface 430 may cooperate with the processor 410 to support communications over one or more communication channels. For example, the I/O interface 410 may include a user interface, such as a keyboard and monitor, and/or a network interface, such as one or more Ethernet interface, Fiber Channel interface, etc.

In some embodiments, the processor 410 may include resources such as processors / CPU cores, the I/O interface 430 may include any suitable network interfaces, or the data storage system 420 may include memory or storage devices. Moreover the apparatus 400 may be any suitable physical hardware configuration such as: one or more server(s), blades consisting of components such as processor, memory, network interfaces or storage devices. In some of these embodiments, the apparatus 400 may include cloud network resources that are remote from each other.

When processor-executable programs 420 are implemented on a processor 410, the program code segments combine with the processor to provide a unique device that operates analogously to specific logic circuits.

Although depicted and described herein with respect to embodiments in which, for example, programs and logic are stored within the data storage system which is communicatively connected to the processor, it should be appreciated that such information may be stored in any other suitable manner (e.g., using any suitable number of memories, storages or databases); using any suitable arrangement of memories, storages or databases communicatively connected to any suitable arrangement of devices; storing information in any suitable combination of memory(s), storage(s) or internal or external database(s); or using any suitable number of accessible external memories, storages or databases. As such, the term data storage system referred to herein is meant to encompass all suitable combinations of memory(s), storage(s), and database(s).

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional or custom, may also be included.

It should be appreciated that any block diagrams herein represent conceptual views of illustrative circuitry embodying the principles of the invention. Similarly, it should be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for deploying a first and a second application (APP-A, APP-B), the method comprising:
- Receiving a first request for deploying a first application;
- Creating a main virtual machine (M-VM) comprising an operating system (OS) and a container execution engine (CE-ENGINE);
- Creating a first container (CONT-A) on the main virtual machine (M-VM) by using the container execution engine (CE-ENGINE), the first container (CONT-A) being configured to connect the cloud management system (CMS) to a first application network (NET-A) enabling the first application (APP-A);
- Receiving a second request for deploying a second application;
- Creating a second container (CONT-B) on the main virtual machine (M-VM) by using the container execution engine (CE-ENGINE), the second container (CONT-B) being configured to connect the cloud management system (CMS) to a second application network (NET-B) enabling the second application (APP-B).

2. Method according to claim 1, further comprising a step of configuring the first and second container (CONT-A, CONT-B) to authorize direct connection from the cloud management system (CMS) to the corresponding application network (NET-A, NET-B) but to block direct connection from said application network (NET-A, NET-B) to the cloud management system (CMS).

3. Method according to any of the previous claims, further comprising the step of adding to each of the first and second containers:
- A first virtual network interface enabling connection of the cloud management system (CMS) to said container (CONT-A, CONT-B), and
- A second virtual network interface enabling connection of said container (CONT-A, CONT-B) to the corresponding application network (NET-A, NET-B).

4. Method according to claim 3, further comprising a step of configuring a forwarding of port from a port of the second virtual network interface to the cloud management system through the first virtual network interface.

5. Cloud management system (CMS), comprising:
- A data storage system;
- A processor in communication with the data storage system, the processor being configured to:
o Receive a first request for deploying a first application;
o Create a main virtual machine (M-VM) comprising an operating system (OS) and a container execution engine (CE-ENGINE);
∘ Create a first container (CONT-A) on the main virtual machine (M-VM) by using the container execution engine (CE-ENGINE), the first container (CONT-A) being configured to connect the cloud management system (CMS) to a first application network (NET-A) enabling the first application (APP-A);
∘ Receive a second request for deploying a second application;
∘ Create a second container (CONT-B) on the main virtual machine (M-VM) by using the container execution engine (CE-ENGINE), the second container (CONT-B) being configured to connect the cloud management system (CMS) to a second application network (NET-B) enabling the second application (APP-B).

6. Cloud management system according to claim 5, wherein the processor is further configured to configure the first and second containers (CONT-A, CONT-B) to authorize direct connection from the cloud management system (CMS) to the corresponding application network (NET-A, NET-B) but to block direct connection from said application network (NET-A, NET-B) to the cloud management system (CMS).

7. Cloud management system according to any of claims 5 or 6, wherein the processor is further configured to add to each of the first and second containers (CONT-A, CONT-B):
- A main virtual network interface enabling connection of the cloud management system (CMS) to said container (CONT-A, CONT-B), and
- A second virtual network interface enabling connection of said container (CONT-A, CONT-B) to the corresponding application network (NET-A, NET-B).

8. Cloud management system according to claim 7, wherein the processor is further configured to configure a forwarding of port from a port of the second virtual network interface to the cloud management system through the first virtual network interface.

9. A non-transitory computer-readable storage medium storing instructions which, when executed by a computer, cause the computer to perform a method, the method comprising:
- Receiving a first request for deploying a first application;
- Creating a main virtual machine (M-VM) comprising an operating system (OS) and a container execution engine (CE-ENGINE);
- Creating a first container (CONT-A) on the main virtual machine (M-VM) by using the container execution engine (CE-ENGINE), the first container (CONT-A) being configured to connect the cloud management system (CMS) to a first application network (NET-A) enabling the first application (APP-A);
- Receiving a second request for deploying a second application;
- Creating a second container (CONT-B) on the main virtual machine (M-VM) by using the container execution engine (CE-ENGINE), the second container (CONT-B) being configured to connect the cloud management system (CMS) to a second application network (NET-B) enabling the second application (APP-B).

10. A non-transitory computer-readable storage medium according to claim 9, wherein the method further comprises a step of configuring the first and second containers (CONT-A, CONT-B) to authorize direct connection from the cloud management system (CMS) to the corresponding application network (NET-A, NET-B) but to block direct connection from said application network (NET-A, NET-B) to the cloud management system (CMS).

11. A non-transitory computer-readable storage medium according to any of claims 9 or 10, wherein the method further comprises a step of adding to each of the first and second containers (CONT-A, CONT-B):
- A first virtual network interface enabling connection of the cloud management system (CMS) to said container (CONT-A, CONT-B), and
- A second virtual network interface enabling connection of said container (CONT-A, CONT-B) to the application network (NET-A, NET-B).

12. A non-transitory computer-readable storage medium according to claim 11, wherein the method further comprises a step of configuring a forwarding of port from a port of the second virtual network interface to the cloud management system through the first virtual network interface.
